# EUROPÄISCHE PATENTANMELDUNG

(11) **EP 3 536 551 A1**
(43) Veröffentlichungstag der Anmeldung: **11.09.2019**
(21) Anmeldenummer: 19000108.1
(22) Anmeldetag: 27.02.2019
(51) Int. Cl.: B60P 3/075, B60P 7/08

(54) **SPANNRATSCHE**

(30) Priorität: 07.03.2018 DE 102018001816
(71) Anmelder: SpanSet GmbH & Co. KG, 52531 Übach-Palenberg (DE)
(72) Erfinder: Schmitz, Ralf, 52477 Alsdorf (DE)
(74) Vertreter: Kietzmann, Manfred

(57) **Zusammenfassung**

Die Erfindung betrifft eine Spannratsche in Form einer Zug- oder Druckratsche zur Verwendung an Spanngurten, die vorrangig zum Transport von Fahrzeugen zum Einsatz kommen, wobei die Spannratsche eine Halterung aufweist.

## Beschreibung

Die Erfindung betrifft eine Spannratsche in Form einer Zug- oder Druckratsche zur Verwendung an Spanngurten, die vorrangig zum Transport von Fahrzeugen zum Einsatz kommen, wobei die Spannratsche eine Halterung aufweist.

Spannratschen sind vielfältig bekannt. Sie werden an Spanngurten verwendet, welche zur Arretierung von Gegenständen, so Transportgut, dienen. Dabei werden Spanngurte zum Arretieren an einem oder mehreren Anschlagpunkten angelegt oder aber zum Zusammenhalten um einen zu arretierenden Gegenstand gelegt. Mittels der Spannratsche wird sodann der Spanngurt mit einer Vorspannung beaufschlagt, sodass das von dem Spanngurt gehaltene Transportgut funktionssicher arretiert wird.

Als nachteilig hat sich herausgestellt, dass bei einem Transport von Fahrzeugen, insbesondere Kraftfahrzeugen, verwendete Zurrmittel in Form von Spanngurten mit einer Spannratsche und Hakenelementen zur Arretierung mindestens eines Rades eines Fahrzeugs nicht immer entsprechend der technischen Regeln eingesetzt werden.

Ferner hat sich herausgestellt, dass bei einem Einsatz von Spannratschen an bekannten Spanngurten, die an Untergründen mit Durchbrüchen mittels Hakenelementen angeordnet werden, wobei die Hakenelemente an solchen Spanngurten angeordnet sind, die Handhabe oftmals wegen geringer Platzverhältnisse schwierig ist. Das ist dann der Fall, wenn die vorgenannten Spanngurte für die Arretierung von Reifen von PKW oder ähnlichen Fahrzeugen eingesetzt werden. Bei der Anordnung dieser besteht oftmals wenig Raum, sodass die aufbringbare Vorspannung wegen der eingeschränkten Bedienbarkeit ebenfalls reduziert ist. Auch kann daher die Anordnung und Ausrichtung der Spannratsche und gesamten Spannvorrichtung negativ tangiert sein. So kann es auch zu einem Verkanten kommen.

Auch erfolgt die Arretierung des Spanngurtes an dem mindestens einen Rad eines Fahrzeugs, wie schon dargelegt, nicht immer normgerecht. Wegen der bei PKW beengten Platzverhältnisse zwischen Untergrund und Fahrzeugboden beziehungsweise im Bereich des Radkastens wird nämlich die Spannratsche oftmals nicht in Flucht zu dem arretierenden Rad und den zu beiden Seiten des Rades arretierten Hakenelementen angeordnet, sondern versetzt dazu, um sozusagen neben dem Fahrzeug genügend Raum zu besitzen, um die Spannratsche bedienen zu können. Dies kann zu einem Verkanten führen.

Die Aufgabe der Erfindung besteht demnach darin, die vorab aufgezeigten Nachteile des Standes der Technik zu vermindern.

Die Aufgabe wird erfüllt durch die Merkmale des Hauptanspruchs 1. Nähere Ausgestaltungen ergeben sich aus den Unteransprüchen. Danach weist eine erfindungsgemäße Spannratsche zum Spannen eines Spanngurts, was in der Regel ein geschlossener Gurt oder zwei Gurtabschnitte sind, zum Arretieren einer Last, so beispielhaft eines Fahrzeugs - nämlich seiner Räder, an einen Untergrund mit mindestens einem Durchbruch, in der Regel aber mehreren Durchbrüchen, so zum Beispiel Lochbleche mit Langlöchern, wobei die Spannratsche an einer Basisauflage eine Halterung aufweist, womit diese an einem Untergrund mit dem mindestens einen Durchbruch an dem mindestens einen Durchbruch reversibel arretierbar ist.

Die Halterung kann erfindungsgemäß eine form- und/oder kraftschlüssige Arretierung an den Untergrund an dem mindestens einen Durchbruch gewähren. Zu beachten ist ferner, dass, wenn nur ein Durchbruch vorhanden ist, die erfindungsgemäße Spannratsche an dem Untergrund zwar arretiert werden kann, jedoch weitere Elemente einer Spannvorrichtung, dessen Teil die Spannratsche ist, anderweitig, so an Ösen oder Ähnlichem oder an Abkantungen eines Untergrunds, arretiert werden müssten, damit die Spannvorrichtung funktionssicher eingesetzt werden kann. Weitere Elemente sind beispielhaft Hakenelemente.

Die Halterung kann als ein schwenkbarer Doppelriegel ausgestaltet sein, so als drehbarer Knebel, zweiarmig mit Schaft, wobei ein Abstand von Armen von einer Riegelbasis ausgehend derart bemessen ist, dass bei einem Verdrehen der in den Durchbruch des Untergrundes einführbaren Halterung ein Formschluss mit dem Untergrund möglich ist.

Die Halterung wird durch den mindestens einen Durchbruch bzw. durch einen der Durchbrüche des Untergrundes hindurchgeführt und sodann kann eine Arretierung durch ein Verschwenken des Knebels erfolgen, wobei die Druckbeaufschlagung und damit eine funktionssichere Arretierung entweder bereits durch das Verschwenken des Knebels erfolgen kann oder aber mittels einer durch die Spannratsche aufgebrachten Vorspannung gewährbar ist.

Der Schaft der Halterung weist vorteilhafterweise einen radialsymmetrischen Querschnitt auf, der eine optimierte Ausrichtung der Spannratsche an dem mindestens einen Durchbruch des Untergrundes gewährt, weil sich so der Schaft in dem mindestens einen Durchbruch, der in der Regel die Form eines Langlochs aufweist, ausrichten kann.

Weiterhin beansprucht die Erfindung ein Zurrmittel, also eine schon vorab erwähnte Spannvorrichtung, nämlich einen Spanngurt mit der erfindungsgemäßen vorbeschriebenen Spannratsche mit Halterung und mit mindestens einem Hakenelement. Vorteilhafterweise besitzt das Zurrmittel aber mindestens zwei Hakenelemente zu Positionierung eines Rades eines Fahrzeugs auf Untergründen in Form von flächenhaften Gebilden mit Durchbrüchen, so zum Beispiel Lochblechen, welche eine Positionierung von Fahrzeugen gewähren, zum Beispiel durch Arretierung mindestens eines ihrer Räder oder anderer Bauteile. Dabei handelt es sich um den Einsatz der erfindungsgemäßen Spannratsche an bereits bekannten Zurrmitteln anstelle der bisherigen Spannratsche.

Die Anordnung der einzelnen Bestandteile der Spannvorrichtung orientiert sich an den dem Fachmann bekannten Vorrichtungen.

Die vorbeschriebene Spannvorrichtung mit der erfindungsgemäßen Spannratsche und Hakenelementen zur Positionierung eines Fahrzeuges, insbesondere eines Kraftfahrzeuges, so beispielhaft mindestens eines Rades des Fahrzeuges auf einem Untergrund aus einem flächenhaften Gebilde mit Durchbrüchen, wie beispielsweise Langlöcher oder sonstige geeignete Öffnungen, ist dabei wie folgt funktionsgemäß angeordnet.

Bei einem an einem freien Ende des Spanngurtes angeordneten Hakenelement greift selbiges in einen Durchbruch eines Untergrundes bei einer Lauffläche eines Reifens eines Rades ein oder durch und liegt oder greift an den Durchbruch angrenzenden Flächen des Untergrundes an. Sodann wird der Spanngurt über das mindestens eine Rad, und zwar über seine Lauffläche, gelegt, sodass ein weiteres Hakenelement in einen weiteren Durchbruch des Untergrundes an einer gegenüberliegenden Seite des Rades bei seiner Lauffläche ein- oder durchgreift und an den weiteren Durchbruch angrenzenden Flächen des Untergrundes anliegt oder angreift. Ob das Hakenelement direkt anliegt oder angreift, hängt dabei von der jeweiligen Ausgestaltung des Hakenelementes und des Durchbruchs ab. So liegen Haken gemäß der DE 20 2017 001 981 U1 an und bekannte Spitzhaken greifen an.

An einem weiteren freien Ende des Spanngurtes schließt sich die erfindungsgemäße Spannratsche an. Der Spanngurt ist an der Spannratsche funktionssicher angeordnet. Ein ansonsten sich an die Spannratsche anschließendes drittes Hakenelement besteht nicht, was Kosten einspart. Die erfindungsgemäße Spannratsche greift sodann mit der Halterung erfindungsgemäß direkt in einen dritten Durchbruch des Untergrundes ein beziehungsweise durch und zwar Anstelle eines dritten Hakenelementes.

Die Halterung wird zum Beispiel in Längsrichtung des dritten Durchbruchs durchgesteckt. Nach einem Verdrehen der Halterung entgegen der Längsrichtung des dritten Durchbruchs kann sodann die Spannratsche an den dritten Durchbruch angrenzenden Flächen des Untergrundes funktionssicher anliegen.

Dadurch ist die Spannratsche besser ausrichtbar und wegen der besseren Arretierung gleichsam besser bedienbar. Sie richtet sich auch bei einer versetzten außerhalb einer Flucht mit einem Rad belegenen Anordnung besser aus. Darüber hinaus wird zudem ein Hakenelement eingespart, was zur Kostenreduzierung beiträgt.

Fahrzeuge im Sinne der Erfindung sind alle selbst angetriebenen oder fremd getriebenen fahrbaren Vorrichtungen, wie beispielhaft Anhänger oder sonstige Wagen. Vorzugsweise erfolgt der Einsatz der erfindungsgemäßen Spannratsche an Fahrzeugen, bei denen beengte Platzverhältnisse zwischen Untergrund und Fahrzeugboden beziehungsweise im Bereich des Radkastens vorliegen, die es nicht möglich machen, eine bekannte Spannratsche leicht zu bedienen.

Die Erfindung wird nachfolgend anhand eines Ausführungsbeispiels unter Bezugnahme auf die Figuren weiter erläutert. Dabei ergeben sich weitere Vorteile, Merkmale und Ausgestaltungen der Erfindung.

Es zeigen:
**Fig. 1 und 2** eine erfindungsgemäße Ratsche an einem Untergrund arretiert,
**Fig. 3** eine erfindungsgemäße Ratsche mit Halterung,
**Fig. 4** eine Halterung,

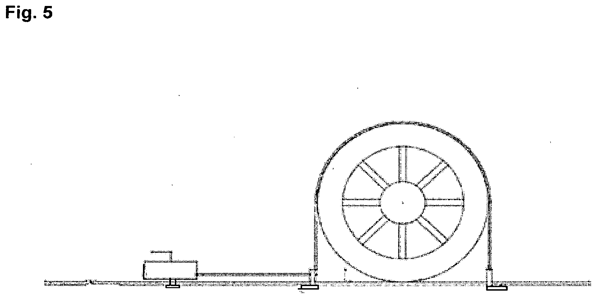

**Fig. 5** eine Anordnung einer Spannvorrichtung mit der erfindungsgemäßen Spannratsche.

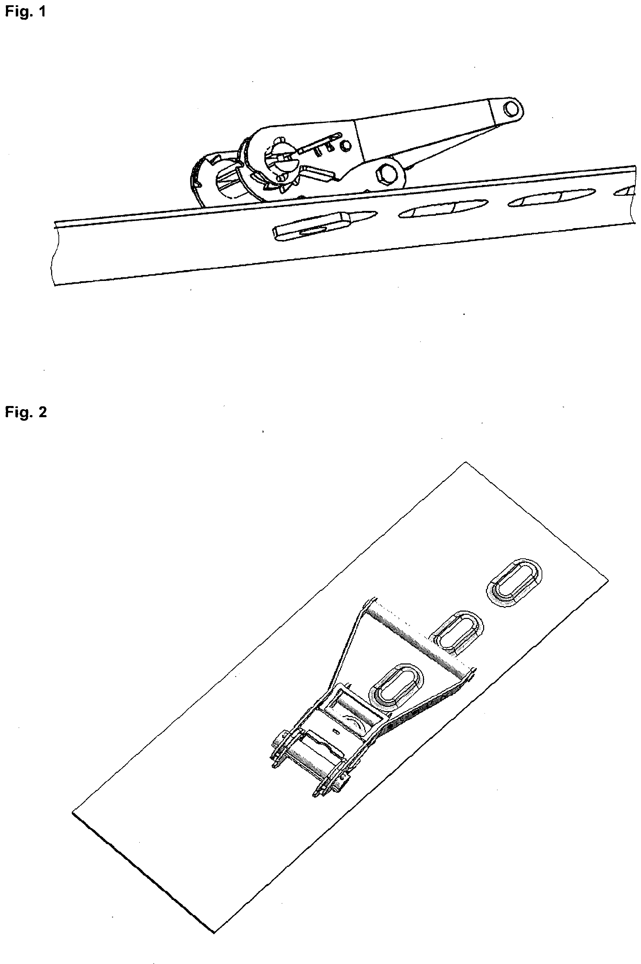

Gemäß der **Fig. 1** und **Fig. 2** ist eine Spannratsche **1** abgebildet, die an einer Basisauflage **2** eine Halterung **3** aufweist, womit die Spannratsche **1** an einem Untergrund **4** mit mehreren Durchbrüchen **5** an einem der Durchbrüche **5** reversibel arretiert ist. Die Durchbrüche **5** sind im Ausführungsbeispiel Langlöcher.

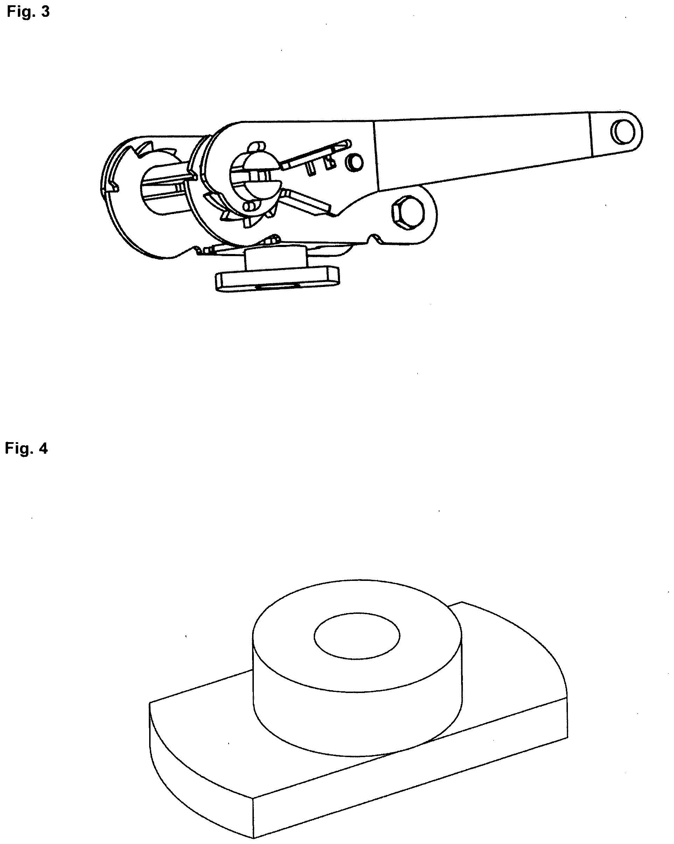

Die Halterung **3,** **Fig. 3****,** ist im Ausführungsbeispiel ein schwenkbarer Doppelriegel mit zwei Armen **7** und **7'** und mit einem Schaft **6,** wobei ein Abstand der zwei Arme **7** und **7'** von einer Riegelbasis **8** ausgehend derart bemessen ist, dass durch ein Verdrehen der in einem der Durchbrüche **5** des Untergrundes **4** eingeführten Halterung **3** ein Formschluss mit dem Untergrund **4** erfolgt, wie aus der **Fig. 1** hervorgeht.

Eine Spannvorrichtung **17** mit der erfindungsgemäßen Spannratsche **1** und einem Hakenelement **10** und einem weiteren Hakenelement **11** zur Positionierung eines Kraftfahrzeuges, nämlich eines Rades **13** des Kraftfahrzeuges auf den Untergrund **4** mit mehrerem Durchbrüchen **5** ist dabei wie folgt funktionsgemäß angeordnet.

Bei einem an einem freien Ende **14** des Spanngurtes **9** angeordneten Hakenelement **10** greift selbiges in einen Durchbruch **5** des Untergrundes **4** bei einer Lauffläche eines Reifens eines Rades **13** durch und liegt an den Durchbruch **5** angrenzenden Flächen des Untergrundes **4** an. Sodann wird der Spanngurt **9** über ein Rad **13** des Kraftfahrzeugs, und zwar über seine Lauffläche, gelegt. Dies erfolgt so, dass sodann ein weiteres Hakenelement **11** in einen weiteren Durchbruch **12** des Untergrundes **4** an einer gegenüberliegenden Seite des Rades **13** bei seiner Lauffläche durchgreift und an den weiteren Durchbruch **12** angrenzenden Flächen des Untergrundes **4** anliegt.

An einem weiteren freien Ende **15** des Spanngurts **9** schließt sich die erfindungsgemäße Spannratsche **1** an und der Spanngurt **9** ist an ihr funktionssicher angeordnet. Ein ansonsten sich an die Spannratsche anschließendes drittes Hakenelement entfällt dabei. Die Halterung **3** der erfindungsgemäßen Spannratsche **1** greift sodann erfindungsgemäß direkt in einen dritten Durchbruch **16** des Untergrundes **4** ein, nämlich Anstelle eines dritten Hakenelementes, um nach einem Verdrehen der Halterung 4 entgegen einer Längsrichtung des dritten Durchbruchs **16** an seinen angrenzenden Flächen des Untergrundes **4** funktionssicher anzuliegen.

### Bezugszeichenliste:

- 1.: Spannratsche
- 2.: Basisauflage
- 3.: Halterung
- 4.: Untergrund
- 5.: Durchbruch
- 6.: Schaft
- 7.: Arme
- 8.: Riegelbasis
- 9.: Spanngurt
- 10.: Hakenelement
- 11.: Weiteres Hakenelement
- 12.: Weiterer Durchbruch
- 13.: Rad
- 14.: freies Ende
- 15.: weiteres freies Ende
- 16.: dritter Durchbruch
- 17.: Spannvorrichtung

## Patentansprüche

1. Spannratsche (1) zum Spannen eines Spanngurtes (9) zum Arretieren einer Last an einem Untergrund (4) mit mindestens einem Durchbruch (5), wobei die Spannratsche (1) an einer Basisauflage (2) eine Halterung (3) aufweist, womit die Spannratsche (1) an einem Untergrund (4) mit dem mindestens einen Durchbruch (5) an dem mindestens einen Durchbruch (5) reversibel arretierbar ist.

2. Spannratsche (1) nach Anspruch 1, wobei die Halterung (3) eine form- und/oder kraftschlüssige Arretierung an den Untergrund (4) an dem mindestens einen Durchbruch (5) gewähren kann.

3. Spannratsche (1) nach Anspruch 1 oder 2, wobei die Halterung (3) ein schwenkbarer Doppelriegel ist, zweiarmig mit einem Schaft (6), wobei ein Abstand von Armen (7) von einer Riegelbasis (8) ausgehend derart bemessen ist, dass bei einem Verdrehen der in den mindestens einen Durchbruch (5) des Untergrundes einführbaren Halterung (3) ein Formschluss mit dem Untergrund (4) möglich ist.

4. Spannratsche (1) nach Anspruch 3, wobei der Schaft (6) einen radialsymmetrischen Querschnitt aufweist.

5. Spannvorrichtung (17) bestehend aus einem Spanngurt (9) mit mindestens einem Hakenelement (10) mit einer Spannratsche (1) nach einem der Ansprüche 1 bis 4.

6. Anordnung einer Spannvorrichtung (17) mit einer Spannratsche (1) nach einem der Ansprüche 1 bis 4 und mindestens zwei Hakenelementen (10), (11) zur Positionierung eines Fahrzeuges auf einem Untergrund (4) aus einem flächenhaften Gebilde mit Durchbrüchen (5), (12), (16) durch Arretierung mindestens eines Rades (13), wobei bei einem an einem freien Ende (14) des Spanngurtes (9) angeordneten Hakenelement (10) selbiges in einen Durchbruch (5) des Untergrunds (4) bei einer Lauffläche eines Reifens eines Rades (13) ein- oder durchgreift und an den Durchbruch (5) angrenzenden Flächen des Untergrunds (4) anliegt oder angreift, der Spanngurt (9) über dem mindestens einen Rad (13) über der Lauffläche gelegen ist, ein weiteres Hakenelement (11) in einen weiteren Durchbruch (12) des Untergrundes (4) an einer gegenüberliegenden Seite des Reifens bei der Lauffläche ein- oder durchgreift, an den weiteren Durchbruch (12) angrenzenden Flächen des Untergrunds (4) anliegt oder angreift und an einem weiteren freien Ende (15) des Spanngurtes (9) sich die Spannratsche (1) anschließt, an der Spannratsche (1) funktionssicher angeordnet ist und die Spannratsche (1) sodann mit der Halterung (3) in einen dritten Durchbruch (16) des Untergrundes (4) eingreift und nach einem Verdrehen der Halterung (3) entgegen einer Längsrichtung des dritten Durchbruchs (16) die Spannratsche (1) an den dritten Durchbruch (16) angrenzenden Flächen des Untergrundes (4) funktionssicher anliegt.
